(19) Europäisches Patentamt

European Patent Office

Office européen des brevets

(11) **EP 2 090 614 A1**

(12) **EUROPEAN PATENT APPLICATION**

(43) Date of publication:
**19.08.2009 Bulletin 2009/34**

(51) Int Cl.:
**C08K 3/36** (2006.01)

(21) Application number: **08002738.6**

(22) Date of filing: **14.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **LA SEDA DE BARCELONA S.A.**
**08820 El Prat De Llobregat, Barcelona (ES)**

(72) Inventor: **Degroote Laurent**
**59190 Caestre (FR)**

(74) Representative: **Matkowska, Franck**
**Matkowska & Associés**
**9 Rue Jacques Prévert**
**59650 Villeneuve d'Ascq (FR)**

(54) **Article made from a polyester-based composition comprising silica particles**

(57)     The article (1') is made from a polymeric composition comprising a polyester resin and silica particles dispersed in the polyester resin, and comprises an unstreched portion (4) and a stretched wall (2'a). The silica particle concentration is not more than 40wt%, and:
(i) the density density (db) of the stretched wall (2'a) is at least 13% less than the density (dp) of the unstreched portion (4)
and/or
(ii) the thickness (WTb) of the stretched wall (2'a) is less than 0.5mm and the light transmission of the stretched wall (2'a) is less than 5% at 800nm and less than 2% at 550nm.

Fig.2

**Description**

**Field of the invention**

The present invention relates to articles comprising a stretched wall and made from a polyester-based composition comprising silica particles.

**Prior art**

Aromatic polyester resins, and in particular polyethylene terephthalate (PET), are widely used in the packaging industry for making various packaging articles. The wording "packaging article" used therein refers to any article that is used for storing any product or material, and especially (but not only) food or beverages and that comprises a stretched wall, i.e. a wall which has been stretched in at least one direction during the manufacturing process of the packaging article. For example, a packaging article can be a stretch blow moulded container, such as bottle, jar or the like, a flexible plastic container, a film or a sheet for a package.

PET is a polymer widely used for making transparent packaging articles. In particular PET is used in the packaging industry for making transparent biaxially stretched containers having good mechanical properties (top load, burst pressure) and good thermal performances. Packaging articles made of PET alone are however not suitable for storing products that are sensible to ultraviolet radiations and/or visible light radiations (i.e. that can be altered or degraded by light radiations and/or by light induced oxidation), such as for example dairy products in the food industry. Such light sensible products need to be stored in opaque packaging articles having a low light transmission at wavelengths up to 800nm, and more especially for visible light radiations between 400nm and 550nm. For example only, light transmissions required for milk application are typically less than 1 % at 550nm and less than 2.5% at 800nm.

A first solution for making a low light transmission packaging articles consists in using an aromatic polyester composition, and for example a PET resin, mixed with a sufficient amount of opacifying agents such as for example titanium dioxide ($TiO_2$). The use of opacifying agents such as $TiO_2$ gives good result in terms of opacity, but is extremely costly because of the high price of $TiO_2$.

A second solution for making truly opaque packaging articles consists in making multilayered packaging articles including a black layer. This solution is efficient in terms of opacity to UV (wavelengths up to 400nm) and visible light (wavelengths ranging from 400nm to 800nm) and is commonly used for example in the food industry for storing dairy products such as UHT milk. This solution is however more costly than a monolayer solution.

There is thus a need in the packaging industry to have an aromatic polyester composition that can be used for making low cost articles, in particular, but not only, packaging articles, and more especially monolayer opaque articles, with a low light transmission up to 800nm.

On known solution disclosed in PCT application WO2006/125549 is to make a packaging article from a polyester-based composition comprising micrometrical silica particles. PCT application WO2006/125549 teaches indeed that the light transmission is lowered if the amount of micrometrical silica particles is increased in the composition. For example only, in PCT application WO2006/125549, light transmissions required for milk application (typically less than 1% at 550nm and less than 2.5% at 800nm) are achieved with silica concentration higher than 45wt %. But in return, high amounts of micrometrical silica particles in the polyester-based composition increase the weight and density of the packaging article and are detrimental for the stretching of the composition. In particular, with silica concentration higher than 30wt %, it becomes for example difficult to stretch and blow mould a standard preform in a mould in order to make a bottle or the like, and only small stretch ratios can be practiced with high silica concentration, which in turn leads to the manufacturing of stretch-blow moulded containers of small volumes only.

**Summary of the invention**

It is commonly acknowledged to date by one skilled in the art that the stretching of a low light transmission polyester article, such as for example biaxial stretching and blow moulding of a preform made of PET blended with dye agents or with opacifying pigments (like $TiO_2$), decreases the thickness of the wall of the article, and thus leads to a decrease of the opacity of the stretched wall and also to an increase of the wall density. The present invention is mainly based on the discovery that the stretching of the wall of an article made from a polymeric composition comprising a polyester resin and silica particles dispersed in the polyester resin surprisingly enables to increase the opacity of the wall and to decrease the density of the wall. High wall opacity and low wall density can thus be advantageously and surprisingly achieved with lower silica particles concentration and higher stretch ratios.

A first object of the invention is thus an article made from a polymeric composition comprising at least a polyester resin and silica particles dispersed in the polyester resin. The article comprises a stretched wall ; the silica particle concentration is not more than 40wt%, and :

(i) The article comprises an unstreched portion and the density (db) of the stretched wall is at least 13% less than the density (dp) of the unstretched portion

and/or

(ii) the thickness (WTb) of the stretched wall is less than 0.5mm and the light transmission of the stretched wall is less than 5% at 800nm and less than 2% at 550nm.

The article of the invention can be advantageously a packaging article. The wording "packaging article" used therein means any article that is used for storing any product or material, and especially (but not only) food or beverages and that comprises a stretched wall, i.e. a wall which has been stretched in at least one direction during the manufacturing process of the packaging article.

The invention is however not limited to packaging articles, but can be practised to make any kind of article, in particular any kind of article wherein opacity of at least a portion of the article is needed. For example only, the article can be an opaque thin wall sheet for printing.

The terms "silica particles" used therein mean any particle having a silica content of at least 50wt%.

Within the scope of the invention, the "polyester resin" may be constituted of a single polymer (the polyester), or of a copolyester, or of a polymer blend wherein at least one component is a polyester or a copolyester. For example, other polymers, like PE, can be blended with the polyester.

Polyester resins that are suitable for carrying out the invention are those generally obtained through polycondensation of diols and dicarboxylic acids or esters thereof.

Among the diols suitable for carrying out the invention, one can mention : ethylene glycol, diethylene glycol, propylene glycol, 1,3-propanediol, 1,4-butanediol, 1,3-butanediol, 2,2-dimethylpropanediol, neopentyl glycol, 1,5-pentanediol, 1,2-hexanediol, 1,8-octanediol, 1,10-decanediol, 1,4-cyclohexanedimethanol, 1,5-cyclohexanedimethanol, 1,2-cyclohexanedimethanol, or mixtures thereof.

Among the dicarboxylic acids suitable for carrying out the invention, one can mention : terephthalic acid, isophthalic acid, orthophthalic acid, 2,5-naphthalene dicarboxylic acid, 2, 6-naphthalene dicarboxylic acid, 1,3-naphthalene dicarboxylic acid, 2,7-naphthalene dicarboxylic acid, methyl terephthalic acid, 4,4'-diphenyldicarboxylic acid, 2,2'-diphenyldicarboxylic acid, 4,4'-diphenylether dicarboxylic acid, 4,4'-diphenylmethanedicarboxylic acid, 4,4'- diphenylsulfonedicarboxylic acid, 4,4'-diphenylisopropylidene-dicarboxylic acid, sulfo-5-isophthalic acid, oxalic acid, succinic acid, adipic acid, sebacic acid, azelaic acid, dodecanedicarboxylic acid, dimer acid, maleic acid, fumaric acid, and all aliphatic diacids, cyclohexane dicarboxylic acid. The dicarboxylic acids can be introduced in the polycondensation medium in an esterified form, for example via methoxy or via ethoxy.

The preferred polyesters for carrying out the invention are polyethylene terephthalate (PET), homo or copolymers thereof, and mixtures thereof.

For carrying the invention, any silica particles having at least 50wt% of $SiO_2$ can be used. Among the preferred silica particles, one can use cristobalite or quartz.

Preferably, high purity silica particles will be used, in particular silica particles comprising at least 90wt% of $SiO_2$, more preferably at least 95wt% of $SiO_2$, and even more.preferably at least 99wt% of $SiO_2$.

The polyester/silica composition used for making the article of the invention can be prepared by several methods, including notably compounding methods. In the compounding methods, the inert silica particles can be dispersed and mixed in the molten polyester resin, for example by using an extruder (single or twin screw extruder). The compound can be also used as a master batch and blended with another resin, preferably a polyester resin. In another method, the silica particles can be also introduced in the polyester reaction medium, preferably before the polymerization starts, said polymerization being carried out in the presence of the silica particles.

Preferably the silica particles are micrometrical particle. The terms "micrometrical particles" used therein mean particles having a particle size of at least 1 $\mu$m.

The terms "particle size" used therein mean the diameter of the particles measured by any standard laser diffraction method and for example the standard Malvern laser diffraction method. The laser diffraction method is well known in the prior art and is commonly used for measuring the size distribution of particles. It has to be reminded that with a laser diffraction method such as the Malvern diffraction method, the volume of the particles is actually measured, and the particle diameters are calculated from the measured volume of the particles, but with the assumption that the particles are spherical. Consequently, the diameter of the particle is calculated from a sphere equivalent volume equal to the measured volume of the particle..

The invention further relates to a process of making an article by stretching a first intermediary article made from a polymeric composition comprising a polyester resin and silica particles dispersed in the polyester resin, wherein the silica particle concentration is not more than 40wt%, and the said first intermediary article is being sufficiently stretched in order to form in the article a wall having :

(i) a density (db) of at least 13% less than the density (dp) of the unstreched wall of the first intermediary article

and/or

(ii) a thickness (WTb) less than 0.5mm and a light transmission less than 5% at 800nm and less than 2% at 550nm and/or

(iii) a local stretch ratio (LSR) of at least 9, and more preferably of t least 10, said local stretch ratio (LSR) being calculated with the following formula :

$$LSR = \frac{WTp \times dp}{WTb \times db}$$

wherein :

- WTb is the thickness of the stretched wall of the article,
- WTp is the thickness of the wall of the first intermediary article,
- db is the density of the stretched wall of the article,
- dp is the density of the wall of the first intermediary article.

The invention further relates to use of the article of the invention for storing a product that is sensible to UV radiations and/or visible light radiations, and more particularly for storing a dairy product.

Other additional and optional technical characteristics of the invention are mentioned in the claims.

## Short description of the drawings

Other characteristics and advantages of the invention will appear more clearly on reading the following detailed description which is made by way of non-exhaustive and non-limiting example, and with reference to the accompanying drawings, in which:

- Figure 1 is schematic drawing of a monolayer preform,
- Figure 2 is a schematic drawing of a monolayer bottle obtained by stretch blow moulding the preform of figure 1,
- Figures 3 to 9 show the light transmission at 550nm (doted lines) and 800nm (solid lines) of stretched bottle walls made of different polymeric compositions described hereafter in details.

## Detailed description of the invention

The following detailed description is focused on the manufacturing of several examples of biaxially stretched containers by using the well-know injection stretch blow moulding technique. Nevertheless, it must be underlined that the scope of the invention is not limited to this particular type of packaging article, but can be extended to any article having a wall that is being stretched in at least one direction. For example, one can also practise the invention for making a packaging article (flexible or rigid) having a stretch wall by any other known technique, and for example by using the extrusion blow moulding or thermoforming techniques. One can also use the invention for making flexible films or sheets. The article of the invention can have a monolayer structure or multilayer structure.

## Experimental results

## Preparation of the polyester/silica composition

A polyester/silica compound (A1/B) is prepared in a first compounding step. In a second step, said polyester/ silica compound (A1/B) is blended as a master batch with a second polyester resin (A2). Compounding step : Polyester/ Silica compound (A1/B)

Said compound is made with 55 wt% of PET pellets (A1) and 45 wt% of micrometrical silica particles (B).

More particularly PET pellets (A1) are those commercialized under reference 9921 P by company named from VORIDIAN.

The silica particles (B) are made of cristobalite. Cristobalite is high purity silica having a narrow particle size distribution.

In particular, the cristobalite particles are for example those commercialized under reference Sibelite® M 6000 by company named SIBELCO.

The composition of Sibelite® M 6000 particles is given in table 1.

Table 1: Sibelite® M 6000 composition

| | |
|---|---|
| SiO$_2$ | 99.5% |
| Fe$_2$O$_3$ | 0.03% |
| Al$_2$O$_3$ | 0.20% |
| TiO$_2$ | 0.02% |
| K$_2$O | 0.05% |
| CaO | 0.01% |

The Sibelite® M6000 particles are substantially spherical and have a density around 2.35Kg/dm$^3$. The main granulometric data of Sibelite® M 6000 particles are given in table 2.

Table 2: Particle size distribution - Sibelite® M 6000

| Particle Sizes ($\mu$m) | Size distribution |
|---|---|
| >20 | None |
| >15 | 1% |
| >10 | 3% |
| >5 | 24% |
| >2 | 67% |
| >1 | 89% |

The particle sizes of table 2 were measured by using the standard Malvern laser diffraction method carried out with an analyzer "MASTERSIZER S" from GOFFYN MEYVIS. In table 2, the size distribution (second column) is expressed in volume percentage.

According, to table 2, 89% of the Sibelite® M 6000 particles have a size greater than 1$\mu$m ; 67% of the Sibelite® M 6000 particles have a size greater than 2$\mu$m, 24% of the Sibelite® M 6000 particles have a size greater than 5$\mu$m, 3% of the Sibelite® M 6000 particles have a size greater than 10$\mu$m ; 1 % of the Sibelite® M 6000 particles have a size greater than 15$\mu$m.

Furthermore, the average particle size of the Sibelite® M 6000 is around 3 $\mu$m.

The compounding step is performed as follows with a co-extruder.

PET is first dried at 160 °c during 6 hours under dried air having a dew point of - 60°c. The residual moisture content is approximately 42 ppm.

55 weight % of dried PET is gravimetrically dosed at the throat of a co-extruder. The co-extruder is a Berstorff Compex low-shear corotating twin-screw extruder.

The cristobalite (45 wt% of total weight) is added in the molten PET material in the co-extruder via a side feeder.

The temperature of the extruder zones are given in table 3 :

Table 3 : Extruder- temperature profile

| Zones | Z1 | Z2 | Z3 | Z4 | Z5 | Z6 | Z7 | Z8 | Z9 | Z10 | Z11 | Z12 |
|---|---|---|---|---|---|---|---|---|---|---|---|---|
| Temperature (°C) | 80 | 300 | 300 | 290 | 280 | 270 | 260 | 250 | 250 | 250 | 250 | 260 |

The side feeder (for adding the cristobalite in the extruder) is connected to the fifth extruder zone (Z5). The rotational speed of the extruder screw is settled to 180 rpm, and the material output is approximately 350 kg /hours

In the compound, the inert cristobalite micrometrical particles (B) are thus dispersed in the polyester matrix formed by the polyester resin A1.

The molten compound is extruded into strings and cooled down in cold water bath (50°C). Then pellets are cut by using a Rieter cutter. Pellets dimension is adjusted to be similar to the pellets of polyester resin (A2).

Blending step - final material (A1/A2/B)

PET pellets (A2) and the aforesaid compound (A1/B) are dry blended at different blend ratios of PET and silicate in order to obtain six different compositions characterized respectively by a silica concentration of about 0wt%, 5wt%, 10 wt%, 15wt% 20 wt% and 25wt%. The PET pellets (A2) are virgin PET pellets of standard grade commercialized by VORIDIAN under reference "9921 w".

The blend is then air dried during 6 hours at 160°c (dew point of - 51°C) before melt processing.

### Injection step

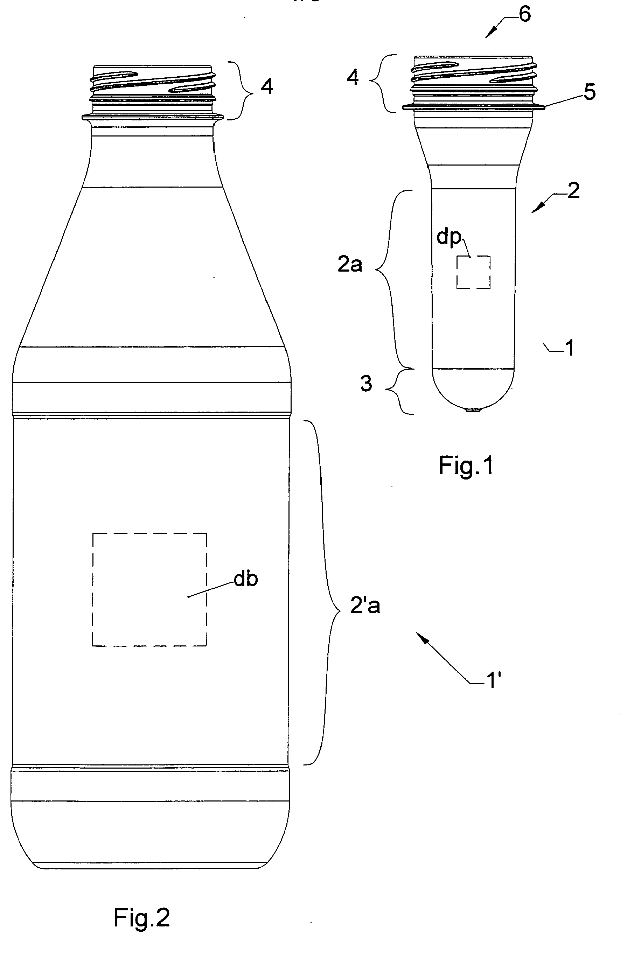

These different compositions are injected in a standard way in order to make monolayer preforms 1, as the one shown on figure 1. The injection step of the preforms is performed on a Husky LX 160 injection machine having a two cavities injection mould. The injection process conditions were the same for all preforms. Said preforms 1 have the well-known general following structure:

- a main tubular body 2 comprising a main cylindrical wall 2a and closed by a substantially hemispherical bottom end 3 ;
- a neck portion 4 including a collar 5, and an opened end-mouth 6.

Different preform designs are manufactured and are characterized respectively by a wall thickness (WTp) of 2.1 mm, 2.5mm and 3mm. The wall thickness (WTp) is measured in the cylindrical wall 2a of the preform.

### Blow moulding step

The preforms are biaxially stretched and blow-moulded on a Sidel stretch blow moulding machine (SBO2/3®), in order to make 0.5L and 1.L bottles like the one shown on figure 2. In total 33 different bottles were blown and analyzed. The settings of the Sidel machine were the same for all bottles and are summarized in table 4.

Table 4 : Blowing machine settings

| General heating power | 79% |
|---|---|
| Zone 1 | 80% |
| Zone 2 | 65% |
| Zone 3 | 25% |
| Zone 4 | 10% |
| Zone 5 | 10% |
| Zone 6 | 65% |
| Zone 7 | 30% |
| Output | 1100 bottle/mould.hour |
| Preblow pressure | 10 bars |
| Blow pressure | 38 bars |
| Blow mould temperature | 10°C |
| Stretch rod diameter | 14 mm |

For all bottles, a two-stage injection stretch blow moulding technique was used. According to this technique, the preforms are reheated for example by infrared radiations before their introduction in the blowing mould. In other variants of the invention, one skilled in the art can also use a one-stage injection stretch blow moulding technique (i.e. without a reheating step of the preforms prior to the blowing step).

### Tests on bottles

Several tests have been performed on the bottles in order to measure :

- the density (dp) of the preform wall 2a and the density (db) of the bottle stretched wall 2'a

- the residual ash content
- the wall thickness (WTb) of the bottle
- the light transmission at 500nm
- the light transmission at 800nm.

**Density**

The density (d) is the quotient of the mass m and the volume V :

$$d = \frac{m}{V}$$

The density measurements are performed as follows by using a method based on the Archimede principle and with a picnometer density determination kit for METTLER TOLEDO AT and AG balances.

Referring to figure 2, a bottle 1' obtained from the preform 1 of figure 1 comprises a main biaxially stretched cylindrical wall 2'a that is obtained after biaxially stretching the cylindrical wall 2a of the preform 1. The neck portion 4 of the bottle 1' has not been stretched during the stretch blow moulding process and is thus identical to the neck portion 4 of the preform 1. The density (db) of the bottle is measured on a square portion of the stretched wall 2'a, that is referred "db" and is delimited by a fictive dotted line on figure 2. To this end, a sample corresponding to this square portion is cut in the bottle.

The density (dp) of the preform is measured on a square portion of the wall 2a, that is referred "dp" and is delimited by a fictive dotted line on figure 1. To this end, a sample corresponding to this square portion "dp" is cut in the preform. The density (dp) of the preform can be also measured in the same way in the neck portion 4 of the preform 1 or in the neck portion 4 of the bottle 1'. The density (dp) of the neck portion 4 of the bottle 1' is actually the same than the density (dp) of the neck portion 4 of the preform 1, because the neck portion 4 is not stretched.

The density (db or dp) of the sample is determined with the aid of a liquid whose density $\rho_0$ is known (water or ethanol are usually used as auxiliary liquids). The sample is weighted in air. Then the sample is immersed in the auxiliary liquid contained in a beaker of know diameter (D1) by means of a pan rigidly attached to two wires of know diameter (D2), and is weighted in the liquid.

The density d of the cut sample (i.e. dp or db) is calculated as follows:

$$d = \frac{A \times (\rho_0 + \rho_{air})}{K \times (A - B)} + \rho_{air}$$

wherein :

*A* is the weight of the cut sample in air,
*B* is the weight of the cut sample in the auxiliary liquid (water), $\rho_0$ is the density of the auxiliary liquid of the given temperature (this value depends on the temperature and must be taken from a density table),
$\rho_{air}$ is the density of air under standard conditions (20°c, 101.325 kPa)
($\rho_{air}$ = 0.0012g/cm$^3$),
K is a correction factor for depth of immersion.

Correction factor K - Depth of Immersion

The pan for holding and immersing the sample during weighing in liquid is rigidly attached to two wires and is immersed approximately 30mm below the surface of the liquid. Since the balance is tarred before each measurement, the additional buoyancy caused by the immersed part of the measuring device is not allowed for in the specific gravity determination.

When a cut sample is weighed in liquid, a volume of the liquid will be displaced which corresponds to the volume of the cut sample. This causes the attachment wires of the pan hanger assembly to be immersed deeper and generate additional buoyancy which introduces an error in the specific gravity determination.

The above correction factor K is determined exclusively by the geometry of the measuring device setup, and is calculated specifically by using the following formula:

$$K = 1 - 2 \times \frac{D2^2}{D1^2}$$

Wherein :

D2 is the diameter of the attachment wires,

D1 is the diameter of the beaker containing the liquid.

For example, when D1 is equal to 76mm and D2 is equal to 0.7mm, K is then equal to 0.99983.

## Ash content

The bottles were burnt at 700°C and the residual ash content weight after calcination was measured. This ash content after calcination at 700°c characterises the real weight percentage of silica (on the total weight of the bottle).

## Wall thickness (WTb) and Light transmission

The light transmission was measured through the stretched wall 2'a of the bottle. For the light transmission measurements, a small square-shaped sample (approximately 1.5cmx1.5cm) was cut into the stretched wall 2'a of the bottle. The wall thickness (WTb) of the sample was measured and the light transmissions at 500nm and at 800nm were measured with a spectrophotometer Shimadzu 2401/2501.

The results of the measurements are summarized in table 5.

Table 5:

| 1L generic Bottle | Ref | weight | WT b | WT P | dp | LSR | Ash | db | T @800nm | T @550nm | (I) $\Delta$d | (II) %$\Delta$d |
|---|---|---|---|---|---|---|---|---|---|---|---|---|
| | | g | mm | mm | gr/cc | | % Minerals | g/cm$^3$ | % | % | gr/cc | % |
| | A | 23.8 | 0.241 | 2.1 | 1.423 | 10.282 | 14.99 | 1.206 | 3.831 | 2.393 | -0.217 | -15.2 |
| | B | 23.8 | 0.267 | 2.1 | 1.456 | 10.555 | 19.92 | 1.085 | 2.286 | 1.234 | -0.371 | -25.5 |
| | C | 23.8 | 0.282 | 2.1 | | | 24.61 | | 1.462 | 0.697 | | |
| | D | 26.7 | 0.281 | 2.5 | 1.422 | 11.206 | 14.88 | 1.129 | 2.42 | 1.292 | -0.293 | -20.6 |
| | E | 26.7 | 0.312 | 2.5 | 1.454 | 11.355 | 19.71 | 1.026 | 1.54 | 0.697 | -0.428 | -29.4 |
| | F | 26.7 | 0.34 | 2.5 | | | 24.57 | | 1.112 | 0.45 | | |
| | G | 29.8 | 0.322 | 3 | 1.424 | 11.158 | 15.19 | 1.189 | 2.344 | 1.18 | -0.235 | -16.5 |
| | H | 29.8 | 0.347 | 3 | 1.451 | 12.027 | 19.8 | 1.043 | 1.221 | 0.493 | -0.408 | -28.1 |
| | I | 29.8 | 0.38 | 3 | | | 24.83 | | 0.708 | 0.226 | | |

(continued)

| 1L generic Bottle | Ref | weight | WTb | WTp | dp | LSR | Ash | db | T @800nm | T @550nm | (I)$\Delta$d | (II)%$\Delta$d |
|---|---|---|---|---|---|---|---|---|---|---|---|---|
| | | g | mm | mm | gr/cc | | % Minerals | g/cm$^3$ | % | % | gr/cc | % |
| | A | 24.52 | 0.199 | 2.1 | 1.33 | 10.451 | 0 | 1.343 | 86.313 | 85.428 | 0.013 | 1.0 |
| | B | 24.84 | 0.183 | 2.1 | 1.361 | 11.509 | 5.29 | 1.357 | 38.873 | 31.836 | -0.004 | -0.3 |
| | C | 25.4 | 0.203 | 2.1 | 1.395 | 10.761 | 10.67 | 1.341 | 12.097 | 9.119 | -0.054 | -3.9 |
| | D | 27.16 | 0.25 | 2.1 | 1.483 | 12.750 | 23.83 | 0.977 | 1.474 | 0.757 | -0.506 | -34.1 |
| | E | 26.7 | 0.205 | 2.5 | 1.33 | 12.122 | 0 | 1.338 | 86.035 | 85.168 | 0.008 | 0.6 |
| | F | 27.28 | 0.219 | 2.5 | 1.358 | 11.374 | 4.81 | 1.363 | 28.099 | 23.012 | 0.005 | 0.4 |
| | G | 27.89 | 0.229 | 2.5 | 1.39 | 11.566 | 9.89 | 1.312 | 7.942 | 5.667 | -0.078 | -5.6 |
| | H | 29.9 | 0.321 | 2.5 | 1.489 | 11.667 | 24.65 | 0.994 | 1.111 | 0.47 | -0.495 | -33.2 |
| | I | 29.8 | 0.239 | 3 | 1.33 | 12.403 | 0 | 1.346 | 85.887 | 83.403 | 0.016 | 1.2 |
| | J | 30.45 | 0.265 | 3 | 1.357 | 11.156 | 4.64 | 1.377 | 23.645 | 18.892 | 0.020 | 1.5 |
| | K | 31.13 | 0.278 | 3 | 1.389 | 11.665 | 9.74 | 1.285 | 5.359 | 3.493 | -0.104 | -7.5 |
| | L | 33.37 | 0.362 | 3 | 1.487 | 13.040 | 24.29 | 0.945 | 0.647 | 0.209 | -0.542 | -36.4 |

(continued)

| 500mL generic Ref Bottle | Ref | weight | WTb | WTp | dp | LSR | Ash | db | T @800nm | T @550nm | (I) Δd | (II) %Δd |
|---|---|---|---|---|---|---|---|---|---|---|---|---|
| | | g | mm | mm | gr/cc | | % Minerals | g/cm$^3$ | % | % | gr/cc | % |
| | A | 24.52 | 0.345 | 2.1 | 1.33 | 6.019 | 0 | 1.345 | 90.123 | 88.939 | 0.015 | 1.1 |
| | B | 24.84 | 0.275 | 2.1 | 1.361 | 7.570 | 5.29 | 1.373 | 53.389 | 42.805 | 0.012 | 0.9 |
| | C | 25.4 | 0.301 | 2.1 | 1.395 | 6.942 | 10.67 | 1.402 | 25.153 | 19.804 | 0.007 | 0.5 |
| | D | 27.16 | 0.344 | 2.1 | 1.483 | 7.013 | 23.83 | 1.291 | 2.534 | 1.302 | -0.192 | -12.9 |
| | E | 26.7 | 0.385 | 2.5 | 1.33 | 6.397 | 0 | 1.350 | 90.059 | 88.783 | 0.020 | 1.5 |
| | F | 27.28 | 0.356 | 2.5 | 1.358 | 6.936 | 4.81 | 1.375 | 47.079 | 37.073 | 0.017 | 1.3 |
| | G | 27.89 | 0.36 | 2.5 | 1.39 | 6.915 | 9.89 | 1.396 | 23.595 | 18.344 | 0.006 | 0.4 |
| | H | 29.9 | 0.402 | 2.5 | 1.489 | 7.189 | 24.65 | 1.288 | 1.755 | 0.757 | -0.201 | -13.5 |
| | I | 29.8 | 0.42 | 3 | 1.33 | 7.047 | 0 | 1.348 | 91.629 | 90.916 | 0.018 | 1.4 |
| | J | 30.45 | 0.417 | 3 | 1.357 | 7.090 | 4.64 | 1.377 | 38.281 | 29.599 | 0.020 | 1.5 |
| | K | 31.13 | 0.426 | 3 | 1.389 | 7.017 | 9.74 | 1.394 | 19.699 | 14.496 | 0.005 | 0.4 |
| | L | 33.37 | 0.486 | 3 | 1.487 | 7.228 | 24.29 | 1.270 | 0.932 | 0.294 | -0.217 | -14.6 |

In table 5, the local stretch ratio (LSR) of the stretched wall 2'a is calculated by using the following formula :

$$LSR = \frac{WTp \times dp}{WTb \times db}$$

Wherein :

- WTp is the wall thickness of the preform in the cylindrical wall 2a,
- WTb is the wall thickness of the bottle in the stretched cylindrical wall 2'a,
- dp and db are the densities of the preform and bottle measured according to the method previously described.

Column (I) in table 5 is the density difference ($\Delta d$) between the density dp (i.e density of the preform 1 or density of the neck portion 4 of the bottle 1') and the density db of the stretched wall portion 2'a of the bottle 1' : $\Delta d = db-dp$.

Column (II) is the percentage of density difference (%$\Delta d$) calculated as follows :
%$\Delta d = \Delta d/dp$.

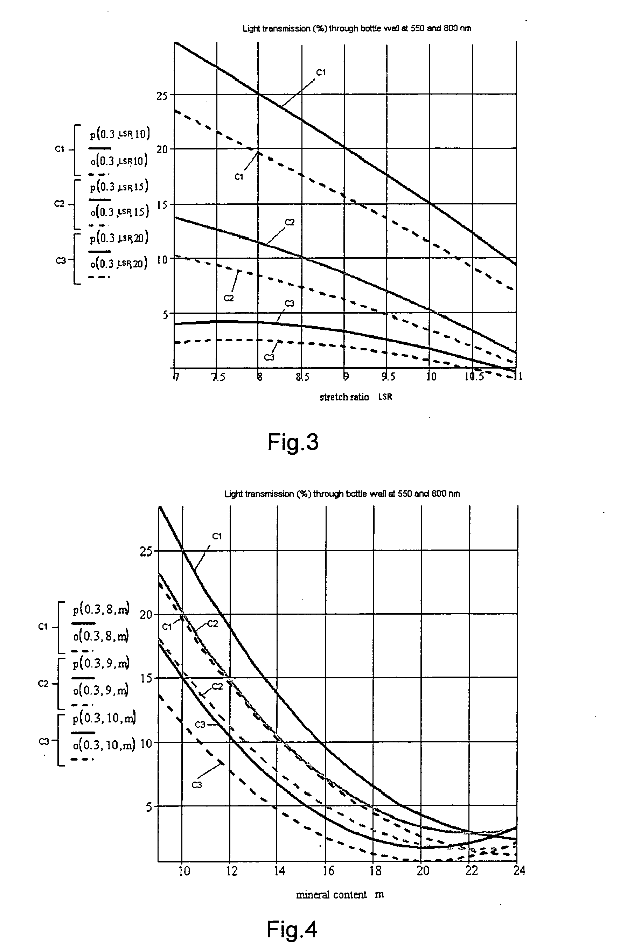

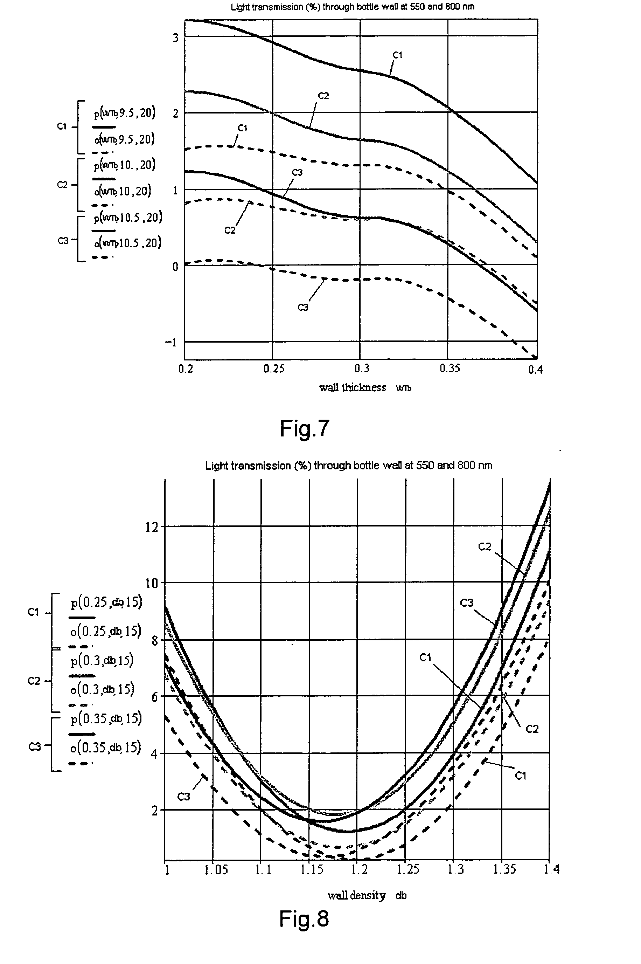

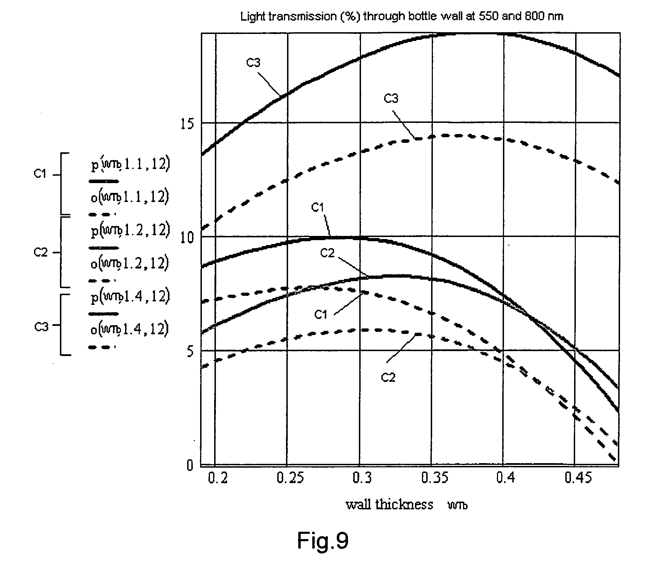

Based on this experimental plan, a software for statistical analysis (Mathcad®) was used to generate "best fit "mathematical equations and estimate what are the optimum conditions to reach low bottle transmission. The outcome of the study is shown in the form of graphs of figures 3 to 9 showing the impact of each parameter. On the graphs of figure 3 to 7, the solid lines p(WTb, LSR, m) are the light transmission at 800 nm, and the doted line o(WTb, LSR, m) are the light transmission at 550 nm. The abbreviation m is the mineral content (wt%) in the bottle wall. On the graphs of figure 8 and 9, the solid lines p (WTb, db, m) are the light transmission at 800 nm, and the doted line o(WTb, db, m) are the light transmission at 550 nm.

Figure 3 shows that surprisingly the bottle wall opacity increases with stretch ratio, i.e. the more the wall 2'a of the bottle is stretched, the higher the opacity of the bottle wall is. With a standard coloured (pigmented or died) PET monolayer stretched blow moulded bottle, the effect of stretching is indeed the opposite, i.e. the bottle wall opacity decreases with local stretch ratio.

Thanks to this surprising effect, high opacity can be achieved with low silica amount (not more than 40wt% and more especially not more than 30%) and with higher stretch ratios. The use of low silica amount advantageously facilitates the stretch blow moulding of the bottle. Furthermore, a high opacity can be advantageously achieved with thinner stretched wall.

One skilled in the art will select the mineral content (m), the thickness (WTb) of the bottle wall and the local stretch ratio (LSR) in order to achieve the targeted opacity.

In particular, for a given silica content of not more than 40wt%, and for a bottle wall thickness (WTb) less than 0.5mm, one skilled in the art will practise a local stretch ratio (LSR) that is sufficiently high for achieving a light transmission that is preferably less than 5% at 800nm and less than 2% at 550nm.

More particularly, when the bottle is used for storing dairy product, such as milk, one skilled in the art will practise a local stretch ratio (LSR) that is sufficiently high for achieving a light transmission that is preferably less than 2.5% at 800nm and less than 1% at 550nm. Referring to figure 7, this high opacity can be achieved with a silica concentration of 20wt%, with a local stretch ratio (LSR) of at least 10 and a bottle wall thickness (WTb) of about 0.2mm or more.

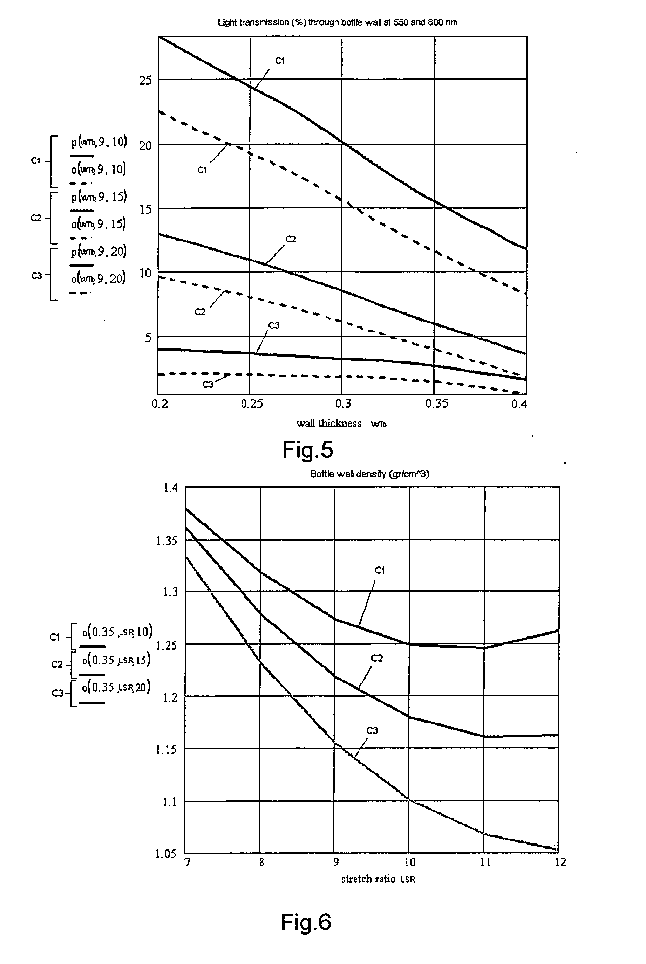

Figure 6 shows that surprisingly the bottle wall density (db) decreases with stretch ratio, i.e. the more the wall of the bottle has been stretched, the lower the density (db) of the bottle wall is. With a standard coloured (pigmented or died) PET monolayer stretched blow moulded bottle, the effect of stretching is indeed the opposite, i.e. the bottle wall density increases with stretch ratio above the density of the preform and is typically higher than 1.3g/cm$^3$. Thanks to this surprising effect, with sufficiently high stretch ratio and with low silica amount (not more than 40wt%, and more especially not more than 30%), the density db of the stretched wall 2'a of the bottle can be surprisingly decreased to a value that is at least 13% less than the density dp of the unstreched neck portion 4 of the preform 1 or bottle 1' (see table 5 - %$\Delta d$), and thereby to low light transmission through the stretched wall 2'a. More especially, very low light transmission can be achieved at 500nm and 800nm when the density db of the stretched wall 2'a of the bottle is at least 25% less than the density dp of the unstreched neck portion 4 of the preform or bottle. More particularly, a density db lower than 1.3 g/cm$^3$ can be achieved with low silica amount (not more than 40wt%, and more especially not more than 30%) and with higher stretch ratios.

Figure 8 shows the impact of the bottle wall density (db) on the light transmission, for a given silica amount (15wt%) and for different bottle wall thickness values (WTb). The graphs of figure 8 show that the light transmission reaches a minimum value for a given optimal density value (db). Otherwise stated, when the local stretch ratio (LSR) is increased up to a value corresponding to this optimal density value, the opacity of the bottle is increased. If the local stretch ratio (LSR) is increased further (the density db being decreased further), then the opacity of the bottle wall decreases.

One skilled in the art will thus select the local stretch ratio (LSR) or the bottle wall density (db) in order to achieve the targeted opacity.

More particularly, it can be derived from the specific examples shown in figure 8 that a suitable range for the bottle wall density (db) is between 1g/cm$^3$ and 1.3 g/cm$^3$, and more preferably between 1.15 g/cm$^3$ and 1.25 g/cm$^3$.

**Claims**

1.  An article (1') made from a polymeric composition comprising at least a polyester resin and silica particles dispersed in the polyester resin, wherein the article comprises a stretched wall (2'a), wherein the silica particle concentration is not more than 40wt%, and wherein :

    (i) the article comprises an unstreched portion (4) and the density (db) of the stretched wall (2'a) is at least 13% less than the density (dp) of the unstreched portion (4)
    and/or
    (ii) the thickness (WTb) of the stretched wall (2'a) is less than 0.5mm and the light transmission of the stretched wall (2'a) is less than 5% at 800nm and less than 2% at 550nm.

2.  The article of claim 1, wherein the density (db) of the stretched wall (2'a) is at least 25% less than the density (dp) of the unstreched portion (4).

3.  The article of claim 1 or 2, wherein the silica particle concentration is not more than 30wt%.

4.  The article of any one of claims 1 to 3, wherein the density (db) of the stretched wall (2'a) is less than 1.3 g/cm$^3$.

5.  The article of any one of claims 1 to 4, wherein the silica particle concentration is at least 10 wt%.

6.  The article of any one of claims 1 to 5, wherein the thickness (WTb) of the stretched wall (2'a) is at least 0.1mm.

7.  The article of claim 6, wherein the thickness (WTb) of the stretched wall (2'a) is at least 0.2mm.

8.  The article of any one of claims 1 to 7, wherein the density (db) of the stretched wall (2'a) is less than 1.25 g/cm$^3$.

9.  The article of any one of claims 1 to 8, wherein the density (db) of the stretched wall (2'a) is at least 1g/cm$^3$.

10. The article of any one of claims 1 to 9, wherein the light transmission through the stretched wall (2'a) is less than 2.5% at 800nm and less than 1 % at 550nm.

11. The article of any one of claims 1 to 10, wherein the silica particles are micrometrical.

12. The article of any one of claims 1 to 11, wherein the silica particles comprise cristobalite particles and/or quartz particles.

13. The article of any one of claims 1 to 12, wherein the stretched wall (2'a) is a monolayer wall.

14. The article of any one of claims 1 to 13, wherein the polyester resin is constituted by a homo- or copolymer of PET.

15. The article of any one of claims 1 to 14, selected from the group:

    rigid container, flexible container, film, sheet.

16. The article of any one of claims 1 to 15, being a biaxially stretched container.

17. The article of claim 16, being a stretch blow moulded container.

18. A process of making an article (1') by stretching a first intermediary article (1) made from a polymeric composition comprising a polyester resin and silica particles dispersed in the polyester resin, wherein the silica particle concentration is not more than 40wt%, and the said first intermediary article (1) is being sufficiently stretched in order to form in the article a wall (2'a) having :

(i) a density (db) of at least 13% less than the density (dp) of the unstreched wall (2a) of the first intermediary article (1)
and/or
(ii) a thickness (WTb) less than 0.5mm and a light transmission less than 5% at 800nm and less than 2% at 550nm
and/or
(iii) a local stretch ratio (LSR) of at least 9, said local stretch ratio (LSR) being calculated with the following formula :

$$LSR = \frac{WTp \times dp}{WTb \times db}$$

wherein :

- WTb is the thickness of the stretched wall (2'a) of the article (1'),
- WTp is the thickness of the wall (2a) of the first intermediary article (1),
- db is the density of the stretched wall (2'a) of the article,
- dp is the density of the wall (2a) of the first intermediary article.

19. The process of claim 18, wherein the density (db) of the stretched wall (2'a) is at least 25% less than the density (dp) of the unstreched wall (2a) of the first intermediary article (1).

20. The process of claim 18 or 19, wherein the silica particle concentration is not more than 30wt%.

21. The process of any one of claims 18 to 20, wherein the density (db) of the stretched wall (2'a) is less than 1.3 g/cm$^3$.

22. The process of claim any one of claims 18 to 21, wherein the local stretch ratio (LSR) is at least 10.

23. The process of any one of claims 18 to 22, wherein the silica particle concentration is at least 10wt%.

24. The process of any one of 18 to 23, wherein the thickness (WTb) of the stretched wall (2'a) is at least 0.1mm.

25. The process of claim 24, wherein the thickness (WTb) of the stretched wall (2'a) is at least 0.2mm.

26. The process of any one of claims 18 to 25, wherein the said first intermediary article (1) is being sufficiently stretched in order to obtain a density (db) of the stretched wall less than 1.25 g/cm$^3$.

27. The process of any one of claims 18 to 26, wherein the said first intermediary article (1) is stretched in order to obtain a density (db) of the stretched wall of at least 1.g/cm$^3$.

28. The process of any one of claims 18 to 27, wherein the said first intermediary article (1) is being sufficiently stretched in order to obtain a light transmission through the stretched wall (2'a) that is less than 2.5% at 800nm and less than 1 % at 550nm.

29. The process of any one of claims 18 to 28, wherein the silica particles are micrometrical.

30. The process of any one of claims 18 to 29, wherein the silica particles comprise cristobalite particles and/or quartz particles.

31. The process of any one of claims 18 to 30, wherein the stretched wall (2'a) is a monolayer wall.

32. The process of any one of claims 18 to 31, wherein the polyester resin is constituted by a homo- or copolymer of PET.

33. The process of any one of claims 18 to 32, wherein a preform (1) as first intermediary article (1) is biaxially stretched and blow moulded in order to form a rigid container (1').

34. The use of the article of any one of claims 1 to 17 or of the article issued from the process of any one of claims 18 to 33 for storing a product that is sensible to UV radiations and/or visible light radiations.

35. The use of claim 34 for storing a dairy product.

Fig.1

Fig.2

Light transmission (%) through bottle wall at 550 and 800 nm

$$C1 \left\{ \begin{array}{c} \dfrac{p(0.3, LSR, 10)}{o(0.3, LSR, 10)} \\ \text{-- --} \end{array} \right.$$

$$C2 \left\{ \begin{array}{c} \dfrac{p(0.3, LSR, 15)}{o(0.3, LSR, 15)} \\ \text{-- --} \end{array} \right.$$

$$C3 \left\{ \begin{array}{c} \dfrac{p(0.3, LSR, 20)}{o(0.3, LSR, 20)} \\ \text{-- --} \end{array} \right.$$

stretch ratio   LSR

## Fig.3

Light transmission (%) through bottle wall at 550 and 800 nm

$$C1 \left\{ \begin{array}{c} \dfrac{p(0.3, 8, m)}{o(0.3, 8, m)} \\ \text{-- --} \end{array} \right.$$

$$C2 \left\{ \begin{array}{c} \dfrac{p(0.3, 9, m)}{o(0.3, 9, m)} \\ \text{-- --} \end{array} \right.$$

$$C3 \left\{ \begin{array}{c} \dfrac{p(0.3, 10, m)}{o(0.3, 10, m)} \\ \text{-- --} \end{array} \right.$$

mineral content   m

## Fig.4

Light transmission (%) through bottle wall at 550 and 800 nm

**Fig.5**

Bottle wall density (gr/cm^3)

**Fig.6**

Light transmission (%) through bottle wall at 550 and 800 nm

## Fig.7

Light transmission (%) through bottle wall at 550 and 800 nm

## Fig.8

Fig.9

Europäisches
Patentamt

European
Patent Office

Office européen
des brevets

# EUROPEAN SEARCH REPORT

Application Number

EP 08 00 2738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 2006/125549 A (AMCOR LTD [AU]; DEGROOTE LAURENT [FR])<br>30 November 2006 (2006-11-30)<br>* page 3, line 12 - line 19 *<br>* page 18, line 6 - line 10 *<br>* claims 1-9 *<br>----- | 1-35 | INV.<br>C08K3/36 |

TECHNICAL FIELDS
SEARCHED        (IPC)

C08K

The present search report has been drawn up for all claims

| Place of search | Date of completion of the search | Examiner |
|---|---|---|
| The Hague | 6 February 2009 | Siemens, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 2 090 614 A1

## ANNEX TO THE EUROPEAN SEARCH REPORT
## ON EUROPEAN PATENT APPLICATION NO.

EP 08 00 2738

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2009

| Patent document cited in search report | Publication date | Patent family member(s) | | Publication date |
|---|---|---|---|---|
| WO 2006125549 A | 30-11-2006 | CA | 2609711 A1 | 30-11-2006 |
| | | EP | 1726614 A1 | 29-11-2006 |

EPO FORM P0459

For more details about this annex : see Official Journal of the European Patent Office, No. 12/82

**EP 2 090 614 A1**

**Patent documents cited in the description**

- WO 2006125549 A